# EUROPEAN PATENT SPECIFICATION

(11) **EP 2 615 067 B1**
(45) Date of publication and mention of the grant of the patent: **24.04.2019**
(21) Application number: 11832779.0
(22) Date of filing: 14.10.2011
(51) Int. Cl.: C02F 3/06, C02F 1/44, C02F 3/08, C02F 3/32

(54) **CONTAINER IN WHICH BIOFILM FORMATION-INHIBITING MICROORGANISMS ARE IMMOBILIZED, AND WATER TREATMENT APPARATUS USING MEMBRANE USING SAME**
BEHÄLTER MIT DARIN IMMOBILISIERTEN BIOFILMBILDUNGSHEMMENDEN MIKROORGANISMEN SOWIE WASSERAUFBEREITUNGSVORRICHTUNG MIT EINER MEMBRAN DAMIT
RÉCIPIENT DANS LEQUEL DES MICROORGANISMES INHIBANT LA FORMATION D'UN BIOFILM SONT IMMOBILISÉS, ET APPAREIL DE TRAITEMENT DE L'EAU EMPLOYANT UNE MEMBRANE L'UTILISANT

(30) Priority: 29.09.2011 KR 20110099110; 15.10.2010 KR 20100101114
(43) Date of publication of application: 17.07.2013
(73) Proprietor: SNU R&DB Foundation, Seoul 151-742 (KR)
(72) Inventor: LEE, Chung-Hak, Seoul 151-050 (KR); OH, Hyun-Suk, Seoul 158-052 (KR); KIM, Sang Ryoung, Daegu 706-090 (KR); LEE, Jung-Kee, Daejeon 305-762 (KR); PARK, Son-Young, Daejeon 301-010 (KR)
(74) Representative: Manitz Finsterwald Patent- und Rechtsanwaltspartnerschaft mbB
(86) International application number: PCT/KR2011/007666
(87) International publication number: WO 2012/050392

(56) References cited:
- EP-A2- 2 488 458
- WO-A1-01/98214
- WO-A2-2007/003290
- JP-A- 2004 322 084
- JP-A- 2007 244 979
- KR-A- 20100 083 223
- US-A- 6 139 963
- US-A1- 2009 159 533

## Description

This invention was supported by the Korea Ministry of Environment ("Converging Technology Project", Project No. 2012001440001) and the Korea Ministry of Education and Science and Technology ("Do-Yak Project" of National Research Foundation of Korea, Project No. NRF-2007-0056709).

### [Technical Field]

The present disclosure relates to a technique for inhibiting membrane biofouling caused by a biofilm formed on the membrane surface during a membrane process for water treatment. More particularly, the present disclosure relates to a microorganism-immobilized container in which microorganisms capable of inhibiting biofilm formation are immobilized and a membrane water treatment apparatus including the same inside a reactor for water treatment, so as to maintain stably the permeability of the membrane for a long period of time.

### [Background Art]

Recently, a membrane process has been applied in various water treatment processes to obtain high-quality purified water. In addition to the membrane bioreactor (MBR) process which combines a membrane separation process with a biological water treatment reactor, the conventional membrane water treatment process combined with a physical/chemical pretreatment process, and nanofiltration and reverse osmosis membrane processes for advanced water treatment have been actively researched and widely applied in actual processes.

During the operation of the membrane process, microorganisms such as bacteria, molds and algae that exist in the reactor start to attach and grow on the membrane surface (attached growth) and finally form a film with a thickness of around a few tens of micrometers, i.e. a biofilm, that covers the membrane surface. The biofilm formation is frequently observed not only in the membrane bioreactor process but also in the conventional membrane water treatment process and the advanced water treatment processes such as nanofiltration and reverse osmosis membrane processes. This biofilm causes membrane biofouling, which serves as filtration resistance to degrade the filtration performance of the membrane and thus leads to problems of decreased permeability, such as shortening of the cleaning cycle and lifespan of the membrane and increase of energy consumption required in filtration and, ultimately, deterioration of the economic efficiency of the membrane water treatment process.

Various researches have been done in the past 20 years to solve the above-described problems. However, the biofilm formed naturally by microorganisms on a surface in contact with water is not completely removed by the conventional physical (e.g., aeration) or chemical methods (e.g., coagulation by addition of a polymeric coagulant) and a satisfactory solution for prevention and control of membrane biofouling has not been suggested yet. The outstanding membrane biofouling problem is attributed to the lack of understanding and technical consideration of the characteristics of microorganisms in the reactor that directly and indirectly affect the membrane biofouling.

The biofilm which is a major cause of membrane biofouling in the membrane water treatment process is not easy to remove once it is formed, because it has high resistance to external physical and chemical impacts. As a result, although several conventional techniques for inhibiting membrane biofouling by physical and chemical methods are effective in the initial stage of biofilm formation, the effect of inhibiting biofouling decreases after maturation of the biofilm. In order to overcome the problem of the conventional methods, development of a new technology approachable from the viewpoint of characteristics of the microorganisms in the reactor, especially regulating and controlling the formation and growth of biofilm on the membrane surface, is required.

Not only in the membrane process for water treatment, biofilm or slime is also formed on a material surface by microorganisms existing in water systems such as water tanks or water pipes of buildings and industrial facilities, thereby degrading performance of equipments (e.g., corrosion of metal surfaces, degradation of cooling tower efficiency and contamination of pipe networks by microorganisms) or deteriorating external appearance. Accordingly, removal of the biofilm or slime is required, but there have been no fundamental solutions based on research on the characteristics of microorganisms in addition to the physical/chemical methods.

Meanwhile, microorganisms tend to respond to environmental change such as temperature, pH, nutrients, etc. to synthesize specific signal molecules and excrete/absorb the molecules to and from outside, thereby perceiving the peripheral cell density. When the cell density increases and the concentration of the signal molecules reaches a threshold level, expression of specific genes begins. As a result, the group behavior of the microorganisms is regulated and this phenomenon is called quorum sensing. Generally, the quorum sensing occurs in environments where the cell density is high. As representative examples of the quorum sensing phenomenon, symbiosis, virulence, competition, conjugation, antibiotic production, motility, sporulation and biofilm formation have been reported (Fuqua et al., Ann. Rev. Microbiol., 2001, Vol. 50, pp. 725-751).

In particular, the quorum sensing mechanism of microorganisms may occur more frequently and easily in the case of a biofilm state with a remarkably higher cell density than in the case of a suspended state. Davies *et al.* reported in 1998 that the quorum sensing mechanism of the pathogen *Pseudomonas aeruginosa* is closely related to various characteristics of biofilm including the extent of biofilm formation, its physical and structural properties such as thickness and morphology, antibiotic resistance of the microorganism, or the like (Science, Vol. 280, pp. 295-298). Since then, researches for inhibiting biofilm formation by artificial regulation of the quorum sensing mechanism have been made in the field of medicine and agriculture so as to prevent contamination of medical appliances (Baveja et al., Biomaterials, 2004, Vol. 50, pp. 5003-5012) or to control plant diseases (Dong et al., Nature, 2001, Vol. 411, pp. 813-817).

The conventional methods for inhibiting biofilm formation by regulating the quorum sensing mechanism of microorganisms are classified into several categories as follows.

Firstly, the biofilm formation can be inhibited by injecting an antagonist known to have a structure similar to that of a signal molecule used in the quorum sensing mechanism and compete with the signal molecule for a gene expression site. As representative antagonists, furanone secreted by *Delisea pulchra*, which is a species of red algae, and halogenated derivatives thereof have been reported (Henzer et al., EMBO Journal, Vol.22, 3803-3815).

Secondly, the biofilm formation can be inhibited by an enzyme that decomposes a signal molecule used in the quorum sensing mechanism (enzyme that inhibits biofilm formation such as one that quenches quorum sensing of microorganisms; e.g., lactonase or acylase). For example, Xu *et al.* developed in 2004 a method for inhibiting biofilm formation on various surfaces by injecting a solution of the enzyme acylase that decomposes acyl-homoserine lactone (AHL) which is a signal molecule of Gram-negative bacteria (US Patent No. 6,777,223, see also WO 01/98214 A1). The reaction whereby the signal molecule is decomposed by lactonase or acylase is as follows.

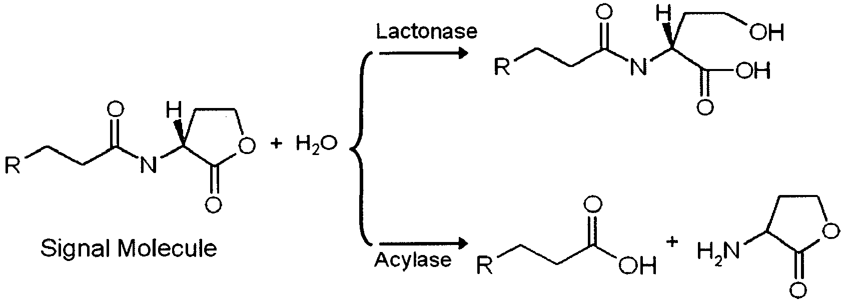

However, the method of inhibiting biofilm formation by directly injecting a solution of acylase is not practically applicable due to excessive loss of the enzyme and fast inactivation of the enzyme through denaturation.

As another method, a method of inhibiting biofouling on membrane surface of a submerged membrane bioreactor (sMBR) by immobilizing acylase on a magnetic carrier by a layer-by-layer method, thereby preventing inactivation of the enzyme by denaturation and allowing easy separation and recovery of the enzyme-immobilized magnetic carrier using magnetic field has been reported recently (KR 10098151 B1, see also US 2009/0159533 A1). However, since microbial flocs are present at high concentrations and the flocs are taken out periodically to keep sludge retention time constant during the MBR process, there is a limit in completely recovering the magnetic carrier mixed with the flocs only through the magnetic field application. Also, in order to maximize the recovery rate of the magnetic carrier, a submerged type reactor wherein the carrier exists only in the reactor and does not circulate through the other interior parts of the system (e.g., tubing, valve, fitting, etc.) should be required. Accordingly, this method is inapplicable to high pressure membrane processes such as nanofiltration or reverse osmosis membrane processes most of which use external pressure-driven type reactors. In addition, since the method using the enzyme-immobilized magnetic carrier requires production of the enzyme through recombination of microorganisms involving culturing, extraction and purification of microorganisms to obtain the immobilizable enzyme, the production cost is high. Further, the immobilization of the purified enzyme by the layer-by-layer method requires a lot of time and cost.

EP 2 488 458 A0 being a prior art document under Art. 54(3) EPC discloses a cooling plant comprising a filter with immobilized microorganism for filtering nutrients from the cooling water by means of metabolism and/or storage of the nutrients by the microorganism in the filter.

WO 2007/003290 A2 discloses a bioreactor for the treatment of waste water comprising carriers for microorganism, wherein the sidewall of the carrier is made of a polymeric material, which is essentially impermeable for fluid.

US 6 139 953 A discloses a permeable carrier in which microorganisms can be immobilized and which is applied for wastewater treatment or for a bioreactor process which generates a specific organic material by an enzyme reaction of organisms.

The inventors of the present disclosure have researched to realize an economical and stable membrane water treatment process by applying a container in which, instead of biofilm formation-inhibiting enzymes, biofilm formation-inhibiting microorganisms producing the enzymes are immobilized therein in a water treatment reactor, thereby solving the above-described problems occurring when the enzymes are directly immobilized and applying the technique of inhibiting biofilm formation from a molecular biological approach to the membrane water treatment process.

### [Disclosure]

### [Technical Problem]

The present disclosure is directed to providing a technique for inhibiting or reducing membrane biofouling in a membrane process for water treatment, not from a physical/chemical approach like the conventional backwashing or chemical cleaning but from a molecular biological approach based on the understanding of the biofilm formation mechanism and, optionally, for providing effect of a physically washing membrane.

### [Technical Solution]

The inventors of the present disclosure have found out that membrane biofouling can be effectively inhibited or reduced by applying a microorganism-immobilized container for inhibiting biofilm formation in which biofilm formation-inhibiting microorganisms are immobilized in a permeable container to a membrane water treatment process and thereby stably maintaining the activity of the biofilm formation-inhibiting microorganisms.

The present disclosure relates to a container with biofilm formation-inhibiting microorganisms immobilized therein, comprising a permeable container and biofilm formation-inhibiting microorganisms immobilized inside the container. The biofilm formation-inhibiting microorganisms may be recombinant microorganisms or natural microorganisms capable of producing enzymes for inhibiting biofilm formation through inhibition of quorum sensing. The container may be a fluidisable carrier which has fluidisability through submerged aeration and comprises a hydrogel. The fluidisable carrier may be a three-dimensional network structure through internal chemical crosslinking which minimizes resistance to mass transfer.

The present disclosure also provides a membrane water treatment apparatus including a reactor accommodating water to be treated, a membrane module for water treatment and the container with biofilm formation-inhibiting microorganisms immobilized therein placed in the reactor.

In the present disclosure, the permeable container may be any container that can isolate and dispose biofilm formation-inhibiting microorganisms at high density in the water treatment reactor and has adequate permeability so as to allow inflow and outflow of oxygen, nutrients, metabolites, etc. required for the growth and activation of the biofilm formation-inhibiting microorganisms, without particular limitation in material, shape, etc. For example, it may be a porous container having a predetermined pore size distribution (see unclaimed Embodiment 1) or a fluidisable carrier having fluidisability through aeration such as a hydrogel (see Embodiment 2 according to the invention).

Embodiment 1 which does not fall into the scope of the appended claims relates to a microorganism-immobilized container for inhibiting biofilm formation comprising a hollow porous container and biofilm formation-inhibiting microorganisms immobilized therein.

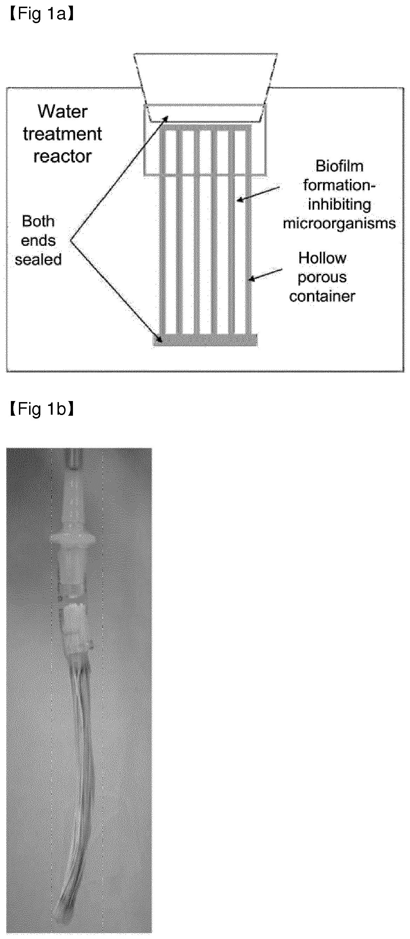

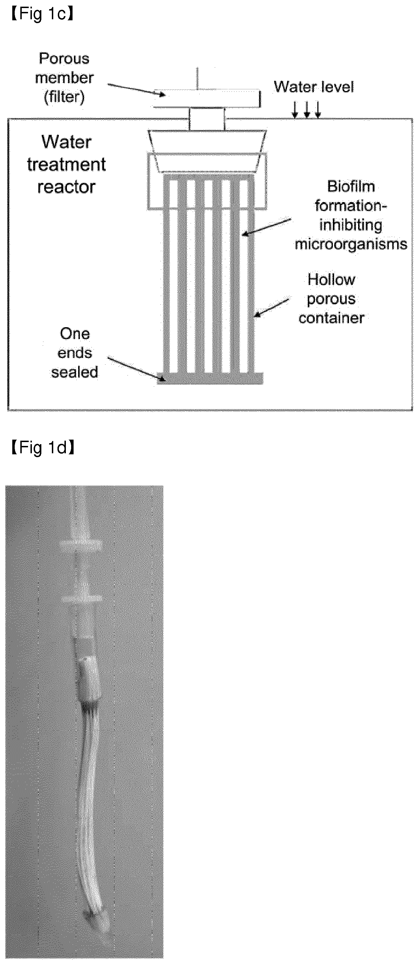

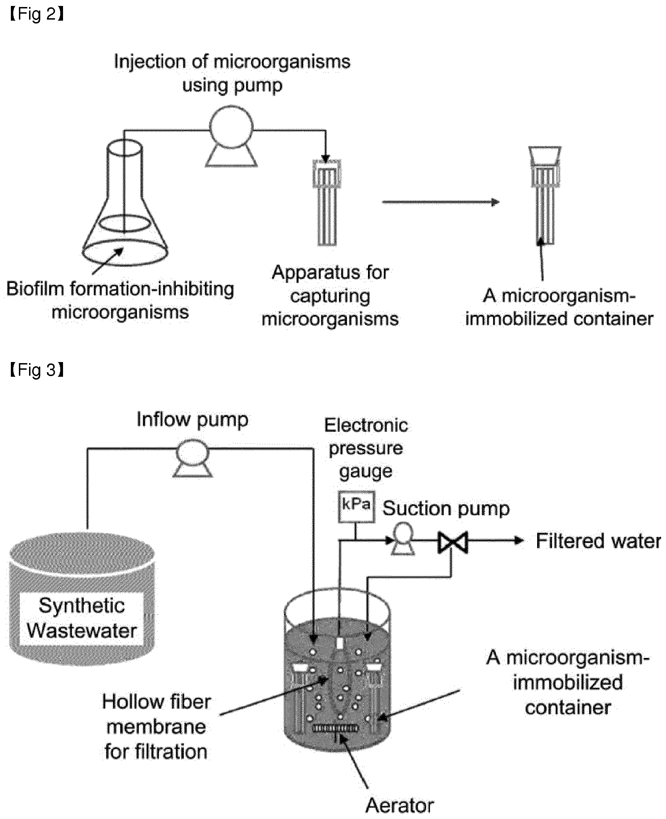

Figs. 1a-1b show schematic diagrams and photographs of a microorganism-immobilized container for inhibiting biofilm formation according to Embodiment 1 of the present disclosure (Figs. 1a-1b: both ends sealed; Figs. 1c-1d: one end sealed) and Fig. 3 shows a schematic diagram of a membrane bioreactor apparatus for water treatment in which the microorganism-immobilized container for inhibiting biofilm formation is disposed.

The microorganism-immobilized container according to Embodiment 1 of the present disclosure may be prepared by capturing the biofilm formation-inhibiting microorganisms inside the hollow porous container. Since the biofilm formation-inhibiting microorganisms are immobilized in the hollow porous container, materials such as biofilm formation-inhibiting enzymes can be efficiently discharged toward the water treatment reactor without loss of the biofilm formation-inhibiting microorganisms toward the water treatment reactor. As a result, biofouling on the membrane surface and in the pores of the membrane can be reduced stably.

There is no particular limitation on the material or shape of the hollow porous container according to Embodiment 1 of the present disclosure as long as it has a porosity that allows the transfer of fine materials such as biofilm formation-inhibiting enzymes, water and signal molecules without loss of the biofilm formation-inhibiting microorganisms. For example, a hollow membrane of a tubular or hollow fiber type commonly used for water treatment or a filter container fabricated to a predetermined shape may be used.

Since the microorganisms are generally 1-10 µm in size on average, a hollow porous container having an average pore size smaller than this may be used to minimize the loss of the microorganisms.

The microorganism-immobilized container for inhibiting biofilm formation according to Embodiment 1 of the present disclosure may be prepared by injecting/capturing the biofilm formation-inhibiting microorganisms inside the hollow porous container and sealing both ends (see Figs. 1a and 1b). Alternatively, only one end may be sealed and the other end may be connected with a conduit to which a porous member for preventing outflow of the microorganisms such as a filter so as to be exposed to the atmosphere outside the water treatment reactor, such that mass transfer of water, biofilm formation-inhibiting enzymes, etc. through the hollow membrane in the water treatment reactor can be easier (see Figs. 1c and 1d).

According to the invention, Embodiment 2 relates to a microorganism-immobilized container for inhibiting biofilm formation including a permeable container (carrier) having fluidisability through submerged aeration and biofilm formation-inhibiting microorganisms immobilized in the container (carrier). Owing to the biofilm formation-inhibiting microorganisms immobilized in the carrier, biofilm formation can be inhibited molecular biologically. In addition, a biofilm formed on the membrane surface can be detached physically by direct application of physical impact derived from the fluidisability of the carrier under submerged aeration condition.

In Embodiment 2 of the present disclosure, the carrier may include as a main component a hydrogel comprising hydrophilic polymers. More specifically, the hydrogel may include at least one selected from a group consisting of alginate, PVA, polyethylene glycol and polyurethane (or composites thereof). As a result, mass transfer into and out of the fluidisable carrier can become easier and damage to the surface of the submerged membrane under submerged aeration condition can be prevented.

The hydrogel in Embodiment 2 of the present disclosure may have a 3-dimensional network structure through internal chemical crosslinking, such that the biofilm formation-inhibiting microorganisms can be captured therein and grow inside the carrier.

For example, alginate is a carrier material consisting mainly of a hydrophilic natural polymer. In calcium chloride solution, this material forms a solid with a network structure through chemical crosslinking, which minimizes resistance to mass transfer. Therefore, it can immobilize not only the biofilm formation-inhibiting microorganisms but also the enzymes produced by the microorganisms. It is also advantageous in that it is suitable because of superior biocompatibility to be used in a reactor where microorganisms for water treatment exist and is unharmful to the human body while being inexpensive and economical.

The carrier in Embodiment 2 of the present disclosure may be substantially spherical or close to a sphere in shape, so as to prevent damage to the surface of the submerged membrane under submerged aeration condition.

Since the size of the fluidisable carrier of Embodiment 2 of the present disclosure is easily controllable, the carrier can be easily separated and recovered using means such as microsieves. Accordingly, the recovery problem of the conventional magnetic carrier container can be solved.

The biofilm formation-inhibiting microorganisms that can be used in the present disclosure may be any recombinant or natural microorganisms capable of producing enzymes for inhibiting biofilm formation. Representatively, microorganisms capable of producing enzymes for inhibiting quorum sensing that decompose signal molecules used in the quorum sensing mechanism may be used. Specifically, microorganisms producing enzymes for inhibiting quorum sensing such as lactonase or acylase may be used. For example, *E*. *coli* obtained by genetically recombining *E*. *coli* XL1-blue with the *aiiA* gene (which is involved in the production of lactonase) extracted from *Bacillus thuringiensis* subsp. *kurstaki* or naturally occurring microorganisms (e.g., *Rhodococcus qingshengii*) may be used. In order to acquire the biofilm formation-inhibiting microorganisms suitable to be used for a water treatment process, the inventors of the present disclosure isolated microorganisms from sludges obtained from the bioreactors of municipal wastewater treatment plants and separated, from the isolated microorganisms, the microorganisms of the genus *Rhodococcus* (including *Rhodococcus qingshengii*) with excellent activity of decomposing signal molecules through enrichment culture method.

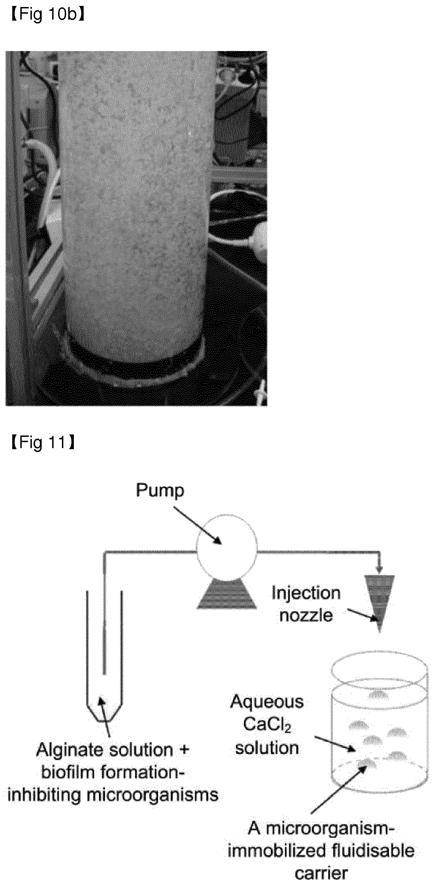

There is no particular limitation on the method of immobilizing the biofilm formation-inhibiting microorganisms inside the fluidisable carrier. In addition to adhesion, entrapment, encapsulation, etc. a method of simply injecting the microorganisms into the container and capturing them may also be used. For example, in Embodiment 1 of the present disclosure, the biofilm formation-inhibiting microorganisms are injected into the hollow porous container such as a membrane using a pump (see Fig. 2) and, in Embodiment 2 of the present disclosure, a suspension wherein the biofilm formation-inhibiting microorganisms are suspended in water at high concentration is mixed with a hydrogel while dropping calcium chloride solution at a predetermined rate such that the microorganisms are 'entrapped' to prepare the carrier (container) of a predetermined size (see Fig. 11).

The present disclosure also provides a membrane water treatment apparatus including a water treatment reactor wherein the microorganism-immobilized container for inhibiting biofilm formation is disposed and a membrane module for water treatment. The membrane module that can be used in the membrane water treatment apparatus of the present disclosure may be any general membrane module for water treatment capable of achieving improved permeability by inhibiting or reducing membrane biofouling and is not particularly limited. Further, the membrane water treatment apparatus of the present disclosure may be not only the general membrane water treatment apparatus such as microfiltration membrane apparatus or ultrafiltration membrane apparatus but also the advanced water treatment apparatus such as nanofiltration apparatus and reverse osmosis apparatus wherein a biofilm is formed on the membrane surface by the microorganisms existing in the water to be treated in addition to the membrane bioreactor (MBR) apparatus wherein a biofilm is formed on the membrane surface by various microorganisms used for water treatment.

### [Advantageous Effects]

When applied to an actual membrane water treatment process, the microorganism-immobilized container for inhibiting biofilm formation of the present disclosure can inhibit the formation of biofilms on the membrane surface and, optionally, can provide an effect of physically washing membrane. As a result, decrease of permeability can be prevented, membrane cleaning cycle is lengthened, consumption of cleansers can be reduced, and long-term membrane filtration can be conducted.

### [Description of Drawings]

Figs. 1a-1d show schematic diagrams and photographs of the microorganism-immobilized container for inhibiting biofilm formation according to unclaimed Embodiment 1 of the present disclosure (Figs. 1a-1b: both ends sealed; Figs. 1c-1d: one end sealed).
Fig. 2 schematically shows a process of preparing the microorganism-immobilized container for inhibiting biofilm formation according to Embodiment 1 of the present disclosure.
Fig. 3 shows a schematic diagram of a membrane bioreactor process using a membrane bioreactor apparatus for water treatment equipped with the microorganism-immobilized container for inhibiting biofilm formation according to Embodiment 1 of the present disclosure
Fig. 4 shows increase of transmembrane pressure (increase of membrane biofouling) in Example 2A according to Embodiment 1 of the present disclosure and in Comparative Example 2A.
Fig. 5 shows signal molecule decomposition activity of the microorganism-immobilized container for inhibiting biofilm formation according to Embodiment 1 of the present disclosure.
Fig. 6 shows that the signal molecule decomposition activity of the microorganism-immobilized container for inhibiting biofilm formation according to Embodiment 1 of the present disclosure is maintained for a long period of time.
Fig. 7 shows increase of transmembrane pressure (increase of membrane biofouling) in Example 4A according to Embodiment 1 of the present disclosure and in Comparative Example 4A.
Fig. 8 shows increase of transmembrane pressure (increase of membrane biofouling) in Example 5A according to Embodiment 1 of the present disclosure and in Comparative Example 5A.

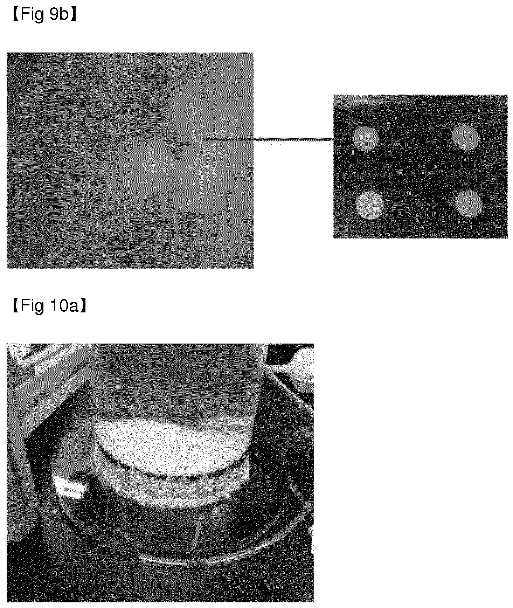

Figs. 9a and 9b show a schematic diagram and photographs of a microorganism-immobilized container (fluidisable carrier) for inhibiting biofilm formation according to Embodiment 2 according to the present invention.
Figs. 10a and 10b show photographs of a bioreactor including a microorganism-immobilized container for inhibiting biofilm formation according to Embodiment 2 of the present disclosure (Fig. 9a: without aeration; Fig. 9b: with aeration).
Fig. 11 shows a process of preparing a microorganism-immobilized container for inhibiting biofilm formation according to Embodiment 2 of the present disclosure.
Fig. 12 shows signal molecule decomposition activity of a microorganism-immobilized container for inhibiting biofilm formation according to Embodiment 2 of the present disclosure.
Fig. 13 shows a schematic diagram of a membrane bioreactor apparatus with a microorganism-immobilized container for inhibiting biofilm formation according to Embodiment 2 of the present disclosure placed inside a bioreactor.
Fig. 14 shows increase of transmembrane pressure (increase of membrane biofouling) in Example 1B according to Embodiment 2 of the present disclosure and in Comparative Examples 1B and 2B versus operation time.
Fig. 15 shows signal molecule decomposition activity (relative activity) of a biofilm formation-inhibiting microorganism-immobilized fluidisable carrier in a membrane bioreactor apparatus according to Embodiment 2 of the present disclosure versus operation time.
Fig. 16 shows the degree of growth of biofilm formation-inhibiting microorganisms inside a fluidisable carrier of a membrane bioreactor apparatus according to Embodiment 2 of the present disclosure versus operation time as wet weight of the fluidisable carrier.

### [Mode for Invention]

Hereinafter, the present disclosure will be described in detail through examples. However, the present disclosure is not limited thereto.

### [Unclaimed Embodiment 1]

### Preparation Example 1A: Preparation of a container with biofilm formation-inhibiting microorganisms immobilized therein (both ends sealed)

Genetically recombined *E*. *coli* capable of producing lactonase was used as biofilm formation-inhibiting microorganisms. Specifically, *E*. *coli* XL1-blue, which is commonly used in genetic recombination, was used and the *aiiA* gene from the *Bacillus thuringiensis* subsp. *kurstaki* was inserted therein through genetic recombination. The *aiiA* gene codes for lactonase which decomposes signal molecules used in the quorum sensing mechanism.

As a hollow porous container for immobilizing the biofilm formation-inhibiting microorganisms, a hollow fiber membrane (available from Econity Co., Ltd) was used. Since the hollow fiber membrane has a pore size of 0.4 µm, the microorganisms cannot pass therethrough whereas water and signal molecules can easily pass therethrough and travel between the container and a reactor. A total of 55 strands of hollow fiber membranes were used to prepare a microorganism-immobilized container having a length of 10 cm and a total membrane surface area of 112.31 cm², with both ends sealed, as shown in Figs. 1a and 1b.

After culturing for 24 hours, 200 mL of *E. coli* was centrifuged and the supernatant was discarded thereby removing the culture medium. The microorganisms were resuspended using Tris-HCI 50 mM buffer (pH 7.0) and then injected into the container using a pump, as shown in Fig. 2.

### Preparation Example 2A: Preparation of a container with biofilm formation-inhibiting microorganisms immobilized therein (one end sealed)

A microorganism-immobilized container was prepared in the same manner as in Preparation Example 1A, except that only one end of the microorganism-immobilized container submerged in a reactor was sealed and the other end was communicated with the outside atmosphere via a filter member (PTFE, pore size 0.45 µm) followed by a tube, and then biofilm formation-inhibiting microorganisms (*E*. *coli*) were injected (see Figs. 1c, 1d and 2).

### Example 1A: Measurement of signal molecule decomposition activity of a container with biofilm formation-inhibiting microorganisms immobilized therein

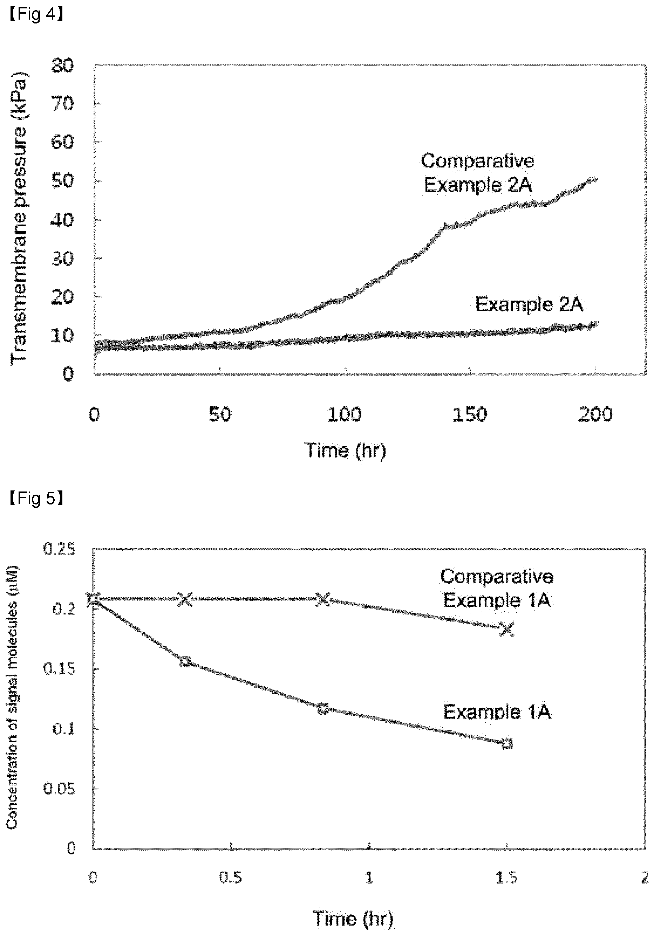

Signal molecule (AHL) decomposition activity of the container with biofilm formation-inhibiting microorganisms immobilized therein was measured using N-octanoyl-L-homoserine lactone (OHL), which is one of representative signal molecules. After adding Tris-HCI 50 mM buffer (pH 7) to a test tube and then injecting OHL to a concentration of 0.2 µM, the container with biofilm formation-inhibiting microorganisms immobilized therein was added thereto and the resulting mixture was reacted for 90 minutes in a shaking incubator of 30 °C at 200 rpm. As a result, about 60% of signal molecules were decomposed for 90 minutes (see Fig. 5).

### Comparative Example 1A

The same procedure was repeated as Example 1A except that the microorganisms were not injected to the container. As a result, the signal molecules were hardly decomposed (see Fig. 5).

### Example 2A: Application to membrane bioreactor process (genetically recombined microorganisms / both ends-sealed container)

The container with biofilm formation-inhibiting microorganisms immobilized therein, prepared in Preparation Example 1A, was applied to a laboratory-scale membrane bioreactor process (see Fig. 3). Specifically, 1.2 L of activated sludge was filled in a cylindrical reactor and diffuser stone was equipped at the bottom to maintain aeration of 1 L/min. A total of two pieces of containers with biofilm formation-inhibiting microorganisms immobilized therein were placed in the reactor symmetrically. For continuous operation, synthetic wastewater containing glucose as a main carbon source was flown in by an inflow pump. The chemical oxygen demand (COD) of the synthetic wastewater was about 550 ppm and hydraulic retention time was 12 hours. The synthetic wastewater was filtered with a flux of 18 L/m²·hr through a hollow fiber ultrafiltration membrane (Zeeweed 500, GE-Zenon, pore size 0.04 µm) submerged in the reactor. The water level of the reactor was maintained by circulating part of the treated water using a level controller and a 3-way-valve. During the operation, mixed liquor suspended solids (MLSS) was maintained at 4500-5000 mg/L. The degree of membrane biofouling caused by biofilm formation on the membrane surface was represented with transmembrane pressure (TMP). The higher the transmembrane pressure, the larger is the degree of membrane biofouling. Even after operation for 200 hours, the transmembrane pressure was no more than 13 kPa (see Fig. 4).

### Comparative Example 2A

The same procedure was repeated as Example 2A except that the microorganisms were not injected to the container. After operation for 200 hours, the transmembrane pressure reached 50 kPa (see Fig. 4).

### Example 3A: Maintenance of activity of a container with biofilm formation-inhibiting microorganisms immobilized therein

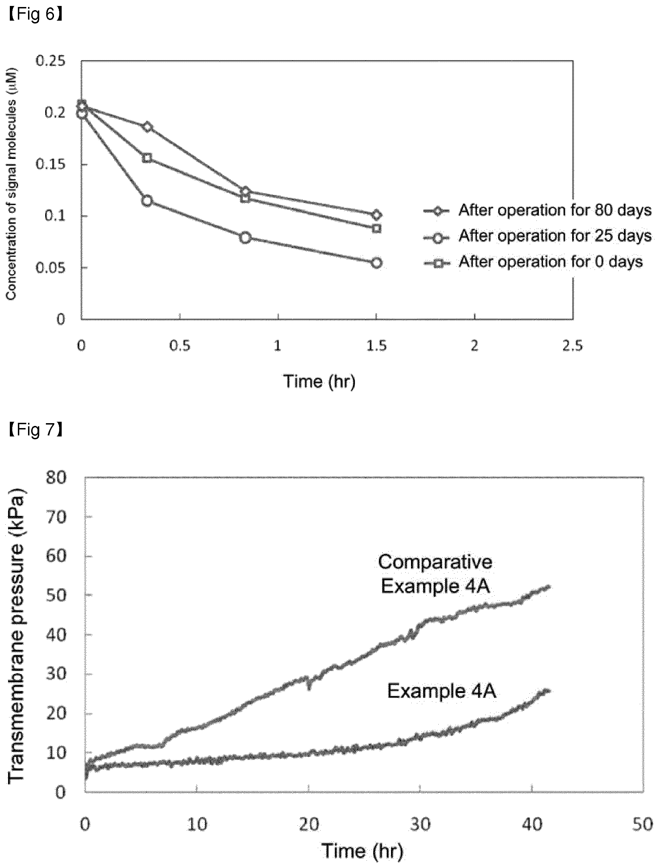

It was investigated whether the signal molecule decomposition activity of the container with biofilm formation-inhibiting microorganisms immobilized therein is maintained for a long period of time. Specifically, after continuous operation for 25 days and 80 days, the container with biofilm formation-inhibiting microorganisms immobilized therein was taken out from the reactor and, followed by washing the outside of the container several times with distilled water, the same procedure as Example 1A was conducted (see Fig. 6). Even after operation for 80 days, the signal molecule decomposition activity was not significantly decreased.

### Example 4A: Application to membrane bioreactor process (natural microorganisms / both ends-sealed container)

The microorganisms used in Example 2A were genetically modified by inserting the lactonase-producing gene into *E*. *coli* and they cannot survive in the actual wastewater environment for a long period of time. Therefore, in order to find microorganisms suitable to be applied to the actual water treatment process, microorganisms were isolated from sludges obtained from a sewage disposal plant located in Okcheon, Chungchengbuk-do, Korea. From the isolated microorganisms, the microorganisms of the genus *Rhodococcus* with excellent activity of decomposing signal molecules could be separated through enrichment culture. A container with biofilm formation-inhibiting microorganisms immobilized therein was prepared using these microorganisms, in the same manner as in Preparation Example 1A, and it was applied to a membrane bioreactor process under the same condition as Example 2A.

The container with biofilm formation-inhibiting microorganisms immobilized therein prepared above was applied to a laboratory-scale membrane bioreactor process. After operation for 40 hours, transmembrane pressure reached 24 kPa (see Fig. 7).

### Comparative Example 4A

The same procedure was repeated as Example 4A except that the microorganisms were not injected to the container. After operation for 40 hours, the transmembrane pressure reached 50 kPa (see Fig. 7).

### Example 5A: Application to membrane bioreactor process (natural microorganisms / one end-sealed container)

A membrane bioreactor was operated under the same condition as Example 4A, except that 2.5 L of activated sludge used in Example 4A was filled in a cylindrical reactor, a total of four pieces of containers with biofilm formation-inhibiting microorganisms immobilized therein were placed in the reactor symmetrically, hydraulic retention time of glucose-containing synthetic wastewater was set to 8 hours, the flux of the wastewater through the membrane was changed to 30 L/m²·hr and MLSS was maintained at 7500-8500 mg/L.

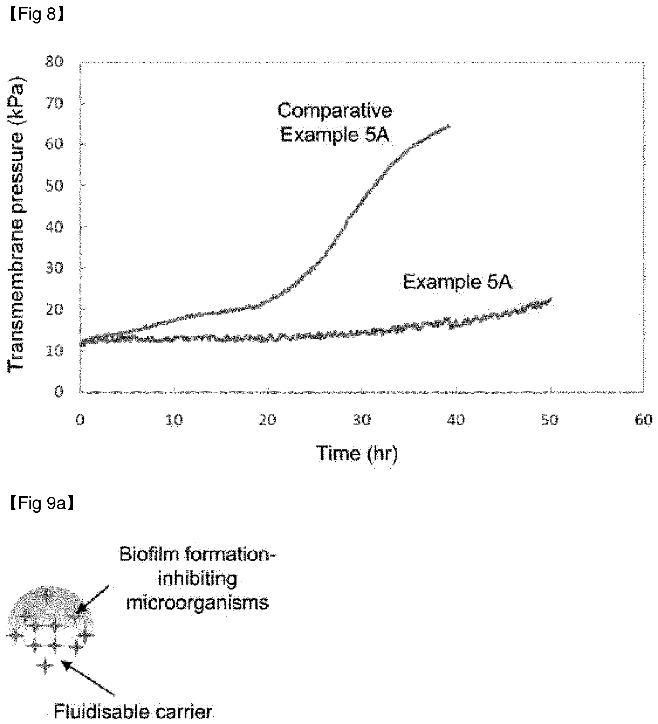

After operation for 50 hours, the transmembrane pressure reached 22 kPa (see Fig. 8).

### Comparative Example 5A

The same procedure was repeated as Example 5A except that the microorganisms were not injected to the container. After operation for 40 hours, the transmembrane pressure reached 64 kPa (see Fig. 8).

### [Embodiment 2 according to the invention]

### Preparation Example 1B: Preparation of biofilm formation-inhibiting microorganism-immobilized fluidisable carrier and measurement of signal molecule decomposition activity

As biofilm formation-inhibiting microorganisms, *Rhodococcus qingshengii,* known to produce lactonase which is one of enzymes for inhibiting quorum sensing, that was isolated from sludges from the municipal wastewater treatment plant in the same manner described in Embodiment 1 was used.

As a fluidisable carrier for immobilizing the biofilm formation-inhibiting microorganisms, the natural polymer sodium alginate (Sigma Co.) was used. Alginate is a typical material used to entrap microorganisms. A preliminary test was conducted in order to find out the alginate concentration that allows maintenance of physical strength in a membrane bioreactor for a long period of time. The concentration of alginate solution was adjusted to 4 wt% at the time of final injecting.

*Rhodococcus qingshengii* was proliferated by culturing for 24 hours in a shaking incubator. 200 mL of the culture was centrifuged and the supernatant was discarded thereby removing the culture medium. The remaining pellets of *Rhodococcus qingshengii* were washed with Tris-HCI 50 mM buffer (pH 7.0) and resuspended in ultrapure water. Subsequently, as shown in Fig. 11, the resuspended solution of the biofilm formation-inhibiting microorganisms was mixed with the alginate solution and injected to calcium chloride (CaCl₂) solution. As a result, a fluidisable carrier having a network structure allowing good mass transfer was prepared through chemical crosslinking. The concentration of the alginate solution at the time of the final injection when preparing the fluidisable carrier was 4 wt%. After crosslinking in 2 wt% calcium chloride (CaCl₂) solution for 1 hour, the prepared fluidisable carrier was dried at room temperature for 20 hours in order to increase physical strength.

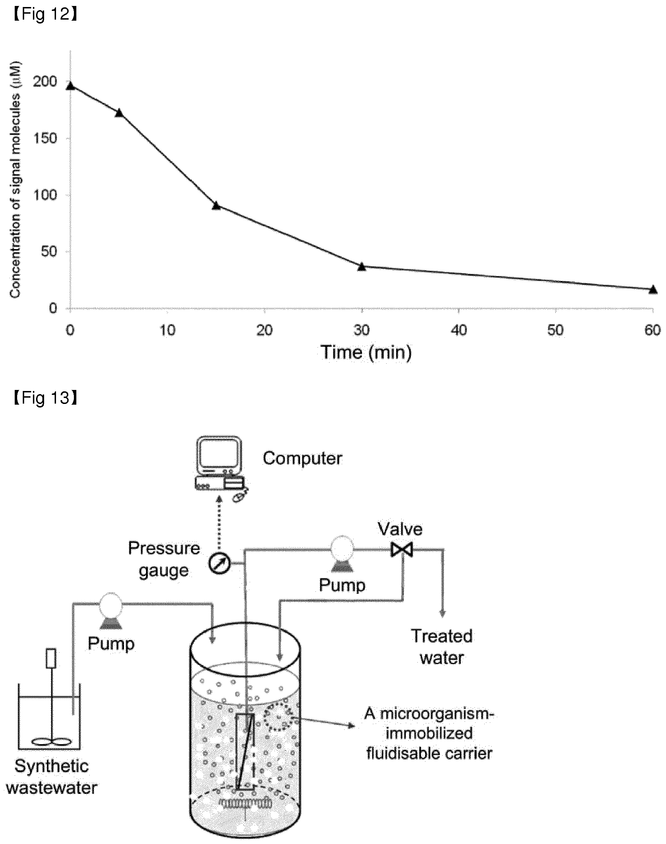

The signal molecule (AHL) decomposition activity of the biofilm formation-inhibiting microorganism-immobilized fluidisable carrier was measured using N-octanoyl-L-homoserine lactone (OHL) as in Embodiment 1. After adding 30 mL of Tris-HCI 50 mM buffer (pH 7) to a test tube and then injecting OHL to a concentration of 0.2 µM, the biofilm formation-inhibiting microorganisms (*Rhodococcus qingshengii*)-immobilized fluidisable carrier was added thereto and the resulting mixuture was reacted for 60 minutes in a shaking incubator of 30 °C at 200 rpm. As a result, about 92% of signal molecules were decomposed for 90 minutes by the biofilm formation-inhibiting enzyme (lactonase) produced by the biofilm formation-inhibiting microorganisms (see Fig. 12).

### Example 1B: Application to membrane bioreactor apparatus

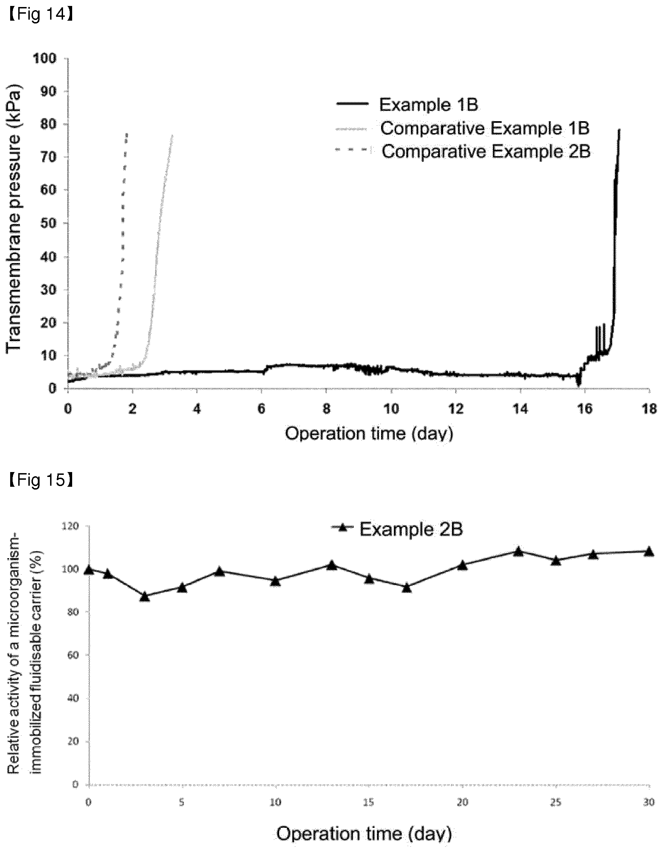

The biofilm formation-inhibiting microorganism-immobilized fluidisable carrier prepared above was applied to a laboratory-scale membrane bioreactor process (see Fig. 13). Specifically, 1.6 L of activated sludge was filled in a cylindrical reactor and diffuser stone was equipped at the bottom to maintain aeration of 1 L/min. A total of 60 pieces of biofilm formation-inhibiting microorganism-immobilized fluidisable carriers were placed in the reactor. For continuous operation, synthetic wastewater containing glucose as a main carbon source was flown in by an inflow pump. The chemical oxygen demand (COD) of the synthetic wastewater was about 560 ppm and hydraulic retention time was 5.3 hours. The synthetic wastewater was filtered with a flux of 28.7 L/m²·hr through a hollow fiber ultrafiltration membrane (Zeeweed 500, GE-Zenon, pore size 0.04 µm) submerged in the reactor. The water level of the reactor was maintained by circulating part of the treated water using a level controller and a 3-way-valve. The degree of membrane biofouling caused by biofilm formation on the membrane surface was represented with transmembrane pressure (TMP). The higher the transmembrane pressure, the larger is the degree of membrane biofouling. Even after operation for 77 hours, the transmembrane pressure was no more than 5 kPa. After operation for 400 hours, the transmembrane pressure reached 70 kPa (see Fig. 14).

### Comparative Example 1B

The same procedure was repeated as Example 1B except that 60 pieces of hydrogel fluidisable carriers without any microorganisms immobilized (The carriers were prepared by not immobilizing the biofilm formation-inhibiting microorganisms in Preparation Example 1B) were placed in the reactor instead of the biofilm formation-inhibiting microorganism-immobilized fluidisable carriers. After operation for 77hours, the transmembrane pressure reached 70 kPa (see Fig. 14).

### Comparative Example 2B

The same procedure was repeated as Example 1B except that the biofilm formation-inhibiting microorganism-immobilized fluidisable carriers were not placed in the membrane bioreactor. After operation for 43 hours, the transmembrane pressure reached 70 kPa (see Fig. 14).

From Example 1B and Comparative Examples 1B-2B, it can be seen that the membrane bioreactor apparatus in which the biofilm formation-inhibiting microorganism-immobilized fluidisable carriers of the present disclosure are placed (Example 1B) exhibits remarkably decreased biofouling on the membrane surface as compared to when the fluidisable carriers without the microorganisms immobilized are placed (Comparative Example 1B) or no fluidisable carrier is placed (Comparative Example 2B). This is thought of as a synergic effect of molecular biological effect of inhibiting biofilm formation by the biofilm formation-inhibiting microorganisms stably immobilized in the fluidisable carrier and removal of biofilms on the membrane surface by physical washing owing to the carrier having fluidisability through submerged aeration .

### Example 2B: Maintenance of activity of biofilm formation-inhibiting microorganism-immobilized fluidisable carrier

It was investigated whether the signal molecule decomposition activity of the biofilm formation-inhibiting microorganisms inside the biofilm formation-inhibiting microorganism-immobilized fluidisable carrier is maintained for a long period of time. Specifically, after continuous operation for 0, 1, 3, 5, 7, 10, 13, 15, 17, 20, 23, 25, 27 and 30 days in the Example 1B, the biofilm formation-inhibiting microorganism-immobilized fluidisable carrier was taken out from the reactor and, followed by washing the outside of the fluidisable carrier several times with distilled water, the signal molecule decomposition activity of the biofilm formation-inhibiting microorganisms was measured according to the same procedure as Preparation Example 1B. Relative activity was measured relative to the activity of the biofilm formation-inhibiting microorganism-immobilized fluidisable carrier on day 0 as 100%. Even after operation for 20days, the signal molecule decomposition activity of the biofilm formation inhibiting-microorganism-immobilized fluidisable carrier did not decrease but increased slightly as compared to the initial (day 0) activity (Fig. 15).

### Example 3B: Growth of biofilm formation-inhibiting microorganisms inside fluidisable carrier

The degree of growth of the biofilm formation-inhibiting microorganisms was investigated after the biofilm formation-inhibiting microorganism-immobilized fluidisable carrier was placed in a membrane bioreactor and operated for a long period of time.

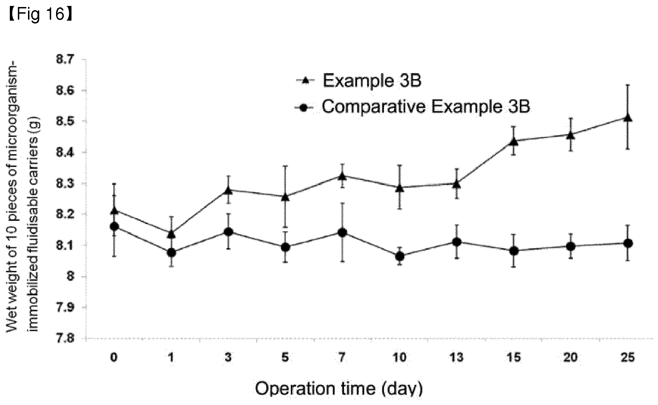

Specifically, while operating the reactor for 25 days after placing the biofilm formation-inhibiting microorganism-immobilized fluidisable carrier, 10 pieces of biofilm formation-inhibiting microorganism-immobilized fluidisable carriers were recovered every 24 hours and, followed by washing the outside of the fluidisable carrier several times with distilled water, and wet weight was measured (Average was taken for 5 repeated measurements). 25 days later, the wet weight was increased as compared to that of the initially (day 0) entrapped biofilm formation-inhibiting microorganisms (Fig. 16).

### Comparative Example 3B

The same procedure was repeated as Example 3B except that alginate fluidisable carrier with no biofilm formation-inhibiting microorganisms immobilized was used. There was almost no change in wet weight (Fig. 16).

From Examples 2B-3B and Comparative Example 3B, it can be seen that the biofilm formation-inhibiting microorganisms entrapped in the biofilm formation-inhibiting microorganism-immobilized fluidisable carrier of the present disclosure grow inside the fluidisable carrier and lead to increased wet weight. This explains why the signal molecule decomposition activity does not decrease but increase slightly.

### [Industrial Applicability]

When applied to an actual membrane water treatment process, the microorganism-immobilized container for inhibiting biofilm formation of the present disclosure can inhibit the formation of biofilms on the membrane surface molecular biologically and, optionally, can provide an effect of physically removing membrane biofouling. As a result, decrease of permeability can be prevented, membrane cleaning cycle is lengthened, consumption of cleansers can be reduced, and lifespan of the membrane can be increased.

And, when compared with the conventional biofilm formation-inhibiting enzyme-immobilized magnetic carrier, the present disclosure is economically superior since the procedure of extracting and immobilizing enzymes is unnecessary and the apparatus for recovering the magnetic carrier is also unnecessary.

## Claims

1. A container with biofilm formation-inhibiting microorganisms immobilized therein, comprising a permeable container and biofilm formation-inhibiting microorganisms immobilized inside the container,
wherein the biofilm formation-inhibiting microorganisms are recombinant microorganisms or natural microorganisms capable of producing enzymes for inhibiting biofilm formation through inhibition of quorum sensing,
wherein the container is a fluidisable carrier which has fluidisability through submerged aeration and comprises a hydrogel, and
wherein the fluidisable carrier has a three-dimensional network structure through internal chemical crosslinking which minimizes resistance to mass transfer.

2. The container with biofilm formation-inhibiting microorganisms immobilized therein according to claim 1, wherein the fluidisable carrier comprises at least one selected from a group consisting of alginate, PVA, polyethylene glycol and polyurethane.

3. The container with biofilm formation-inhibiting microorganisms immobilized therein according to claim 1, wherein the fluidisable carrier is spherical in shape.

4. The container with biofilm formation-inhibiting microorganisms immobilized therein according to claim 1, wherein the enzyme for inhibiting quorum sensing is lactonase or acylase.

5. A membrane water treatment apparatus, comprising a reactor accommodating water to be treated, a membrane module for water treatment and the container with biofilm formation-inhibiting microorganisms immobilized therein according to any one of claims 1 to 4 placed in the reactor.

6. A water treatment process using the membrane water treatment apparatus according to claim 5, the process comprising filtering water to be treated through the membrane in the presence of the container with biofilm formation-inhibiting microorganisms immobilized therein.

## Patentansprüche

1. Behältnis mit Mikroorganismen, die eine Bildung eines Biofilms verhindern und darin immobilisiert sind, umfassend ein permeables Behältnis und Mikroorganismen, welche die Bildung des Biofilms verhindern und im Innern des Behältnisses immobilisiert sind,
wobei die Mikroorganismen, welche die Bildung des Biofilms verhindern, rekombinante Mikroorganismen oder natürliche Mikroorganismen sind, die zur Erzeugung von Enzymen zum Verhindern der Bildung des Biofilms durch die Verhinderung von Quorum Sensing in der Lage sind,
wobei das Behältnis ein fluidisierbarer Träger ist, der Fluidisierbarkeit durch Tauchbelüftung aufweist und ein Hydrogel umfasst, und
wobei der fluidisierbare Träger eine dreidimensionale Netzstruktur durch interne chemische Quervernetzung aufweist, die einen Widerstand gegenüber Massentransfer minimiert.

2. Behältnis mit Mikroorganismen, die eine Bildung eines Biofilms verhindern und darin immobilisiert sind, nach Anspruch 1, wobei der fluidisierbare Träger zumindest eines umfasst, das aus der Gruppe ausgewählt ist, die aus Alginat, PVA, Polyethylenglykol und Polyurethan besteht.

3. Behältnis mit Mikroorganismen, die eine Bildung eines Biofilms verhindern und darin immobilisiert sind, nach Anspruch 1, wobei der fluidisierbare Träger kugelförmig ist.

4. Behältnis mit Mikroorganismen, die eine Bildung eines Biofilms verhindern und darin immobilisiert sind, nach Anspruch 1, wobei das Enzym zum Verhindern des Quorumsensing Lactonase oder Acylase ist.

5. Membran-Wasserbehandlungsvorrichtung, umfassend einen Reaktor, der zu behandelndes Wasser aufnimmt, ein Membranmodul zur Wasserbehandlung und das Behältnis mit Mikroorganismen, die eine Bildung eines Biofilms verhindern und darin immobilisiert sind, nach einem der Ansprüche 1 bis 4, welches in dem Reaktor angeordnet ist.

6. Wasserbehandlungsverfahren unter Verwendung der Membran-Wasserbehandlungsvorrichtung nach Anspruch 5, wobei das Verfahren umfasst, dass zu behandelndes Wasser durch die Membran hindurch unter dem Vorhandensein des Behältnisses mit Mikroorganismen, die eine Bildung eines Biofilms verhindern und darin immobilisiert sind, gefiltert wird.

## Revendications

1. Conteneur avec des micro-organismes inhibant la formation de biofilm immobilisés à l'intérieur, comprenant un conteneur perméable et des micro-organismes inhibant la formation de biofilm immobilisés à l'intérieur du conteneur,
dans lequel les micro-organismes inhibant la formation de biofilm sont des micro-organismes recombinants ou des micro-organismes naturels capables de produire des enzymes pour inhiber la formation de biofilm par inhibition de détection de quorum,
dans lequel le conteneur est un support capable d'être fluidifié qui présente une capacité à être fluidifié par aération en submersion et qui comprend un hydrogel, et
dans lequel le support capable d'être fluidifié a une structure en réseau tridimensionnel par réticulation chimique interne qui minimise la résistance au transfert de masse.

2. Conteneur avec des micro-organismes inhibant la formation de biofilm immobilisés à l'intérieur selon la revendication 1, dans lequel le support capable d'être fluidifié comprend au moins un composant sélectionné parmi un groupe comprenant alginate, PVA, polyéthylène glycol et polyuréthane.

3. Conteneur avec des micro-organismes inhibant la formation de biofilm immobilisés à l'intérieur selon la revendication 1, dans lequel le support capable d'être fluidifié a une forme sphérique.

4. Conteneur avec des micro-organismes inhibant la formation de biofilm immobilisés à l'intérieur selon la revendication 1, dans lequel l'enzyme pour inhiber la détection de quorum est du lactonase ou acylase.

5. Appareil de traitement d'eau à membrane, comprenant un réacteur qui abrite de l'eau à traiter, un module à membrane pour traitement de l'eau, et le conteneur avec des micro-organismes inhibant la formation de biofilm immobilisés à l'intérieur selon l'une quelconque des revendications 1 à 4 placé dans le réacteur.

6. Processus de traitement d'eau utilisant l'appareil de traitement d'eau à membrane selon la revendication 5, le processus comprenant la filtration de l'eau à traiter à travers la membrane en présence du conteneur avec des micro-organismes inhibant la formation de biofilm immobilisés à l'intérieur.
